# EUROPEAN PATENT SPECIFICATION

(11) **EP 1 734 317 B1**
(45) Date of publication and mention of the grant of the patent: **17.12.2008**
(21) Application number: 06009829.0
(22) Date of filing: 12.05.2006
(51) Int. Cl.: F25B 13/00, F25B 27/02, F24F 3/14

(54) **Cogeneration system**
Wärme-Kraft-System
Système de cogénération

(30) Priority: 16.06.2005 KR 20050051953
(43) Date of publication of application: 20.12.2006
(73) Proprietor: LG Electronics, Inc., Seoul 150-010 (KR)
(72) Inventor: Cho, Eun Jun, Buchun-si Kyunggi-do 420-030 (KR); Ha, Sim Bok, Kwangmyung-si Kyungki-do 423-010 (KR); Chung, Baik Young, Kyeyang-ku Inchun-si 407-710 (KR); Kim, Cheol Min, Youngdeungpo-ku Seoul 150-054 (KR); Chang, Se Dong, Kwangmyung-si Kyungki-do 423-060 (KR)
(74) Representative: Vossius & Partner

(56) References cited:
- EP-A- 1 628 102
- EP-A2- 1 202 005
- WO-A-01/96794
- JP-A- 2001 280 745
- US-A- 4 222 244
- US-A- 5 020 320

## Description

The present invention relates to a cogeneration system, and, more particularly, to a cogeneration system in which waste heat of a drive source adapted to drive a generator can be used to enhance the heating performance of a heat pump type air conditioner, can be used as a heat source to regenerate a dehumidifier, and can be used to assist a heating operation of the heat pump type air conditioner.

In JP-A-2001280745 an air conditioner is disclosed in which it is possible to prevent an indoor heat exchanger from being frosted even in case of performing a cooling operation under a low outdoor temperature. According to JP-A-2001280745 a compressor driven by an engine, an indoor heat exchanger, an outdoor heat exchanger and a four-way valve are connected through a refrigerant pipe passage. A branch pipe passage having its one end communicated with a high pressure liquid pipe of the refrigerant pipe passage at the time of heating operation and further having the other end communicated with a high pressure gas pipe at the pump, a branch pipe passage opening and closing valve and an engine waste heat recovering heat exchanger.

Further, US-A-4 222 244 discloses an apparatus for conditioning air within a space. A combination of solar energy and waste heat from a diesel engine which drives a refrigerant apparatus is used for regenerating desiccant for the two stages of dehumidification. A blower is connected to withdraw air from the space through lighting fixtures. As air is withdrawn through the lighting fixtures, a portion of the heat produced by the lighting fixtures is withdrawn from the space, thereby reducing the quantity of air needed to be supplied through a diffuser to cool the space to a desired temperature. A portion of the air withdrawn from the space by the blower is circulated through a duct to a mixing valve or chamber. Fresh air which is to be added to the conditioned space enters the apparatus through a duct. Fresh air entering through the duct passes through a contactor or chemical dehumidifier wherein it contacts a spray of glycol solution. As such fresh air is dehumidified through contact with the desiccant, heat of sorption is generated. A heat transfer fluid circulated between coil or indirect heat exchanger and a cooling tower removes the heat of sorption from the dehumidified fresh air. The dehumidified fresh air leaves the dehumidifier through a duct which connects with the mixing valve or chamber wherein it mixed the circulated air from the space.

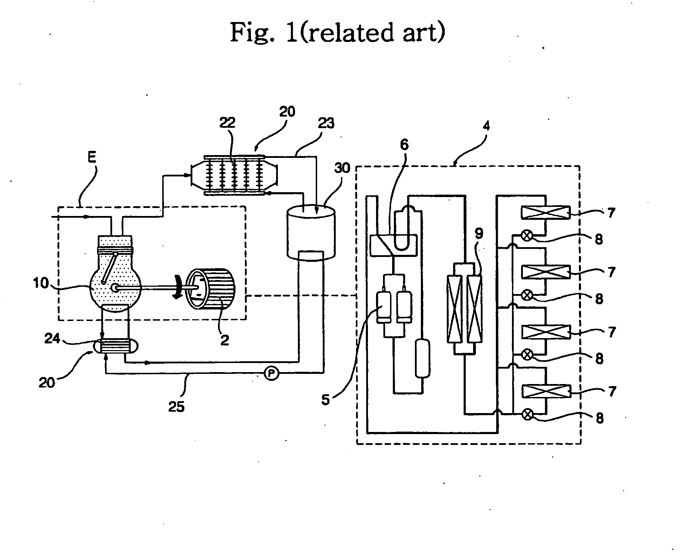

FIG. 1 is a schematic view illustrating a conventional cogeneration system.

As shown in FIG. 1, the conventional cogeneration system includes a generator 2 which generates electric power, a drive source 10 which operates to drive the generator 2, and generates waste heat during the operation thereof, such as an engine (hereinafter, the drive source 10 will be referred to as an "engine"), a waste heat recoverer 20 which recovers the waste heat generated from the engine 10, and a heat consumer 30 which utilizes the waste heat recovered by the waste heat recoverer 20, such as a thermal storage tank.

The electric power generated from the generator 2 is supplied to various electric home appliances including a heat pump type air conditioner 4 and various home illumination devices.

The generator 2 and engine 10 are installed in an engine room E which is defined in a chassis (not shown) installed separately from the heat consumer 30.

The heat pump type air conditioner 4 includes compressors 5, a 4-way valve 6, indoor heat exchangers 7, expansion devices 8, and outdoor heat exchangers 9.

When the heat pump type air conditioner 4 operates in cooling mode, each compressor 5 compresses a refrigerant introduced thereinto. The compressed refrigerant passes through the 4-way valve 6, outdoor heat exchangers 9, expansion devices 8, and indoor heat exchangers 7, in this order, and returns to the compressors 5 through the 4-way valve 6. In this case, each outdoor heat exchanger 9 functions as a condenser, and each indoor heat exchanger 7 functions as an evaporator to absorb heat from indoor air.

On the other hand, when the heat pump type air conditioner 4 operates in heating mode, the refrigerant compressed in each compressor 5 passes through the 4-way valve 6, indoor heat exchangers 7, expansion devices 8, and outdoor heat exchangers 9, in this order, and returns to the compressors 5 through the 4-way valve 6. In this case, each outdoor heat exchanger 9 functions as an evaporator, and each indoor heat exchanger 7 functions as a condenser to heat indoor air.

The waste heat recoverer 20 includes an exhaust gas heat exchanger 22 which absorbs heat from exhaust gas discharged from the engine 10, and a cooling water heat exchanger 24 which absorbs heat from cooling water used to cool the engine 10.

The exhaust gas heat exchanger 22 is connected to the heat consumer 30 via a first heat supply line 23. Accordingly, the exhaust gas heat exchanger 22 can transfer the waste heat absorbed from the exhaust gas of the engine 10 to the heat consumer 30 via the first heat supply line 23. As mentioned above, the heat consumer 30 may be a thermal storage tank.

The cooling water heat exchanger 24 is connected to the heat consumer 30 via a second heat supply line 25. Accordingly, the cooling water heat exchanger 24 can transfer the waste heat absorbed from the cooling water of the engine 10 to the heat consumer 30 via the second heat supply line 25.

A hot water supplier or the like is connected to the heat consumer 30.

However, the conventional cogeneration system has a problem in that the efficiency of the cogeneration system cannot be maximized because the waste heat of the engine 10 is only used to supply hot water without being used in the heat pump type air conditioner 4.

The present invention has been made in view of the above-mentioned problems, and it is an object of the invention to provide a cogeneration system in which waste heat of a drive source adapted to drive a generator can be used as a heat source for regenerating a dehumidifier to dehumidify air or as a heat source for heating indoor air, or can be used to enhance the heating performance of an air conditioner, so that the cogeneration system can obtain a maximal efficiency.

Another object of the invention is to provide a cogeneration system which can efficiently supply electric power generated from a generator and commercial electric power in accordance with an operation mode, namely, cooling or heating mode, an indoor operation load, and outdoor temperature.

In accordance with the present invention, these objects are accomplished by providing a cogeneration system comprising: a generator which generates electricity; a drive source which operates to drive the generator, and generates waste heat during the operation of the drive source; a heat pump type air conditioner which includes an outdoor unit including a compressor, a 4-way valve, an outdoor heat exchanger, and an outdoor expansion device, and an indoor unit including an indoor expansion device and an indoor heat exchanger; a waste heat recovering heat exchanger which evaporates a refrigerant of the heat pump type air conditioner, using the waste heat of the drive source; a ventilation line which ventilates indoor air; an auxiliary heating heat exchanger and a dehumidifier which are arranged in the ventilation line; a regeneration heat supplying heat exchanger which regenerates the dehumidifier; and a waste heat transfer unit which recovers the waste heat of the drive source, and transfers the recovered waste heat to at least one of the waste heat supplying heat exchanger, the auxiliary heating heat exchanger, and the regeneration heat supplying heat exchanger.

The ventilation line may include air discharge ducts which guide the indoor air to be discharged to the atmosphere, and air supply ducts which guide outdoor air to be introduced into an indoor space.

The cogeneration system may further comprise a heat-transferring heat exchanger which heat-exchanges the indoor air passing through the air discharge ducts with the outdoor air passing through the air supply ducts.

The auxiliary heating heat exchanger may be arranged in one of the air supply ducts.

The dehumidifier may include a desiccant wheel which has two wheel portions respectively arranged in one of the air discharge ducts, and a corresponding one of the air supply duct, and a wheel rotator which turns the desiccant wheel.

The waste heat transfer unit may include a waste heat recoverer which recovers the waste heat of the drive source, and a thermal storage tank which stores the waste heat recovered by the waste heat recoverer, to supply the stored heat to at least one of the auxiliary heating heat exchanger and the regeneration heat supplying heat exchanger.

The waste heat recoverer may include a cooling water heat exchanger which absorbs heat from cooling water used to cool the drive source, and an exhaust gas heat exchanger which absorbs heat from exhaust gas discharged from the drive source.

The waste heat transfer unit may further include a first waste heat supplier which supplies the waste heat recovered by the waste heat recover to one of the waste heat supplying heat exchanger or the thermal storage tank, and a second waste heat supplier which supplies the waste heat stored in the thermal storage tank to one of the auxiliary heating heat exchanger or the regeneration heat supplying heat exchanger.

The first waste heat supplier may include a recoverer-side heat medium circulation line which guides a heat medium into one of the thermal storage tank and the waste heat supplying heat exchanger, and into the waste heat recoverer, a recoverer-side heat medium circulation pump which pumps the heat medium, to circulate the heat medium through the recoverer-side heat medium circulation line, a first heat medium supply valve which is arranged in the recoverer-side heat medium circulation line, to selectively allow the heat medium emerging from the waste heat recoverer to be supplied to the thermal storage tank via the recoverer-side heat medium circulation line, and a second heat medium supply valve which is arranged in the recoverer-side heat medium circulation line, to selectively allow the heat medium emerging from the waste heat recoverer to be supplied to the waste heat supplying heat exchanger via the recoverer-side heat medium circulation line.

The second waste heat supplier may include a tank-side heat medium circulation line which guides a heat medium into one of the regeneration heat supplying heat exchanger and the auxiliary heating heat exchanger, and into the thermal storage tank, a tank-side heat medium circulation pump which pumps the heat medium, to circulate the heat medium through the tank-side heat medium circulation line, a first heat medium supply valve which is arranged in the tank-side heat medium circulation line to selectively allow the heat medium emerging from the thermal storage tank to be supplied to the regeneration heat supplying heat exchanger via the tank-side heat medium circulation line, and a second heat medium supply valve which is arranged in the tank-side heat medium circulation line, to selectively allow the heat medium emerging from the thermal storage tank to be supplied to the auxiliary heating heat exchanger via the tank-side heat medium circulation line.

The cogeneration system may further comprise a power switching device which performs a switching operation to select one of the electricity generated from the generator and commercial electricity such that the selected electricity is supplied to the heat pump type air conditioner.

The cogeneration system according to the present invention can use the waste heat of the drive source for a variety of purposes depending on an indoor environment, and can therefore operate at a maximal energy efficiency because the cogeneration system includes the generator, the drive source for driving the generator, the waste heat supplying heat exchanger for enhancing the heating performance of the heat pump type air conditioner, the auxiliary heating heat exchanger using the waste heat of the drive source as a heat source for heating indoor air, and the regeneration heat supplying heat exchanger using the waste heat of the drive source as a heat source for regenerating the dehumidifier.

Also, in the cogeneration system according to the present invention, when the heat pump type air conditioner operates in heating mode under the condition in which the outdoor temperature is low, the refrigerant is evaporated by the waste heat supplying heat exchanger which is heated by the waste heat. Accordingly, the heat pump type air conditioner can have a constant heating capacity irrespective of the outdoor temperature. It is also possible to minimize formation of frost on the outdoor heat exchangers.

Meanwhile, when the heat pump type air conditioner operates in cooling mode under the condition in which the operation load of the indoor units is high, the internally-generated electricity is supplied to the heat pump type air conditioner. On the other hand, when the operation load of the indoor units is low, the commercial electricity is supplied to the heat pump type air conditioner. Accordingly, it is possible to minimize the consumption of energy and the consumption of electricity during the cooling operation of the heat pump type air conditioner.

The above objects, and other features and advantages of the present invention will become more apparent after reading the following detailed description when taken in conjunction with the drawings, in which:
FIG. 1 is a schematic view illustrating a conventional cogeneration system;
FIG. 2 is a schematic diagram of a cogeneration system according to an exemplary embodiment of the present invention, illustrating a state in which the cogeneration system operates in cooling mode under a condition of a high indoor operation load;
FIG. 3 is a schematic diagram of the cogeneration system according to the exemplary embodiment of the present invention, illustrating a state in which the cogeneration system operates in cooling mode under a condition of a low indoor operation load;
FIG. 4 is a schematic diagram of the cogeneration system according to the exemplary embodiment of the present invention, illustrating a state in which the cogeneration system operates in heating mode under a condition of a low outdoor temperature;
FIG. 5 is a schematic diagram of the cogeneration system according to the exemplary embodiment of the present invention, illustrating a state in which the cogeneration system operates in heating mode under conditions of a high outdoor temperature and a high indoor operation load; and
FIG. 6 is a schematic diagram of the cogeneration system according to the exemplary embodiment of the present invention, illustrating a state in which the cogeneration system operates in heating mode under conditions of a high outdoor temperature and a low indoor operation load.

Hereinafter, exemplary embodiments of a cogeneration system according to the present invention will be described with reference to the annexed drawings.

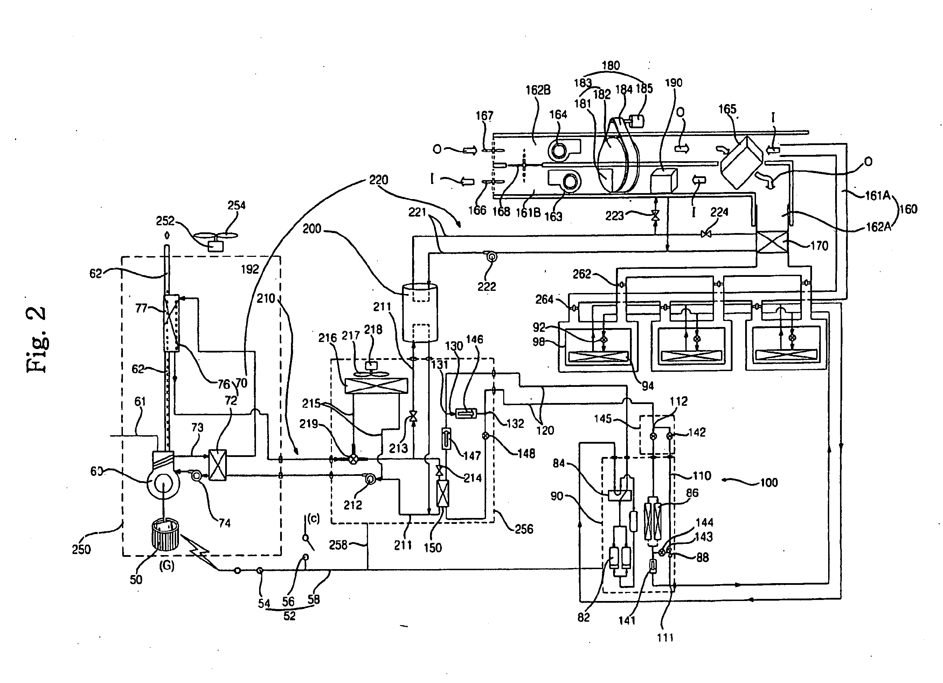

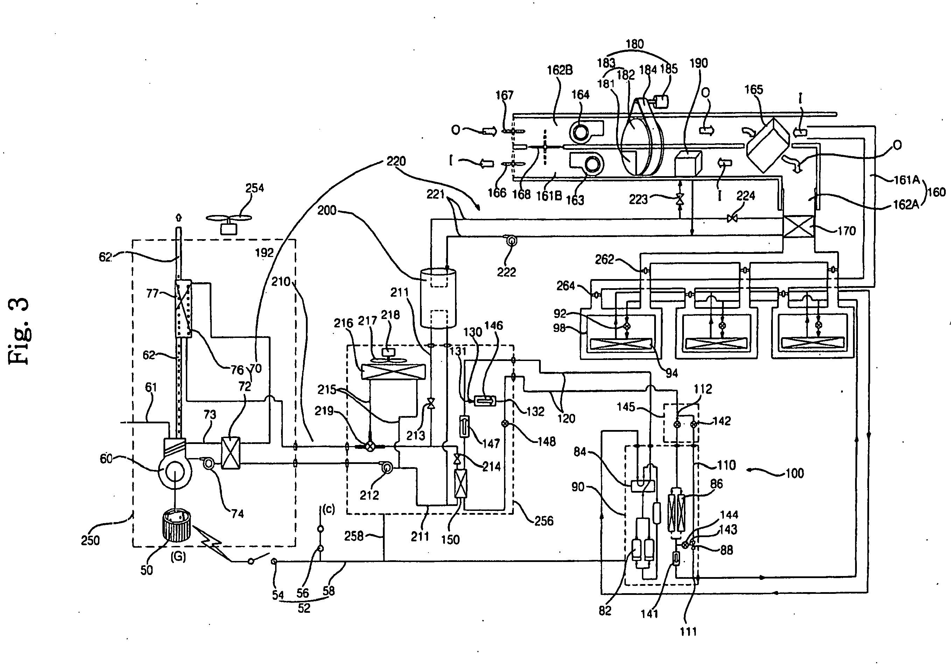

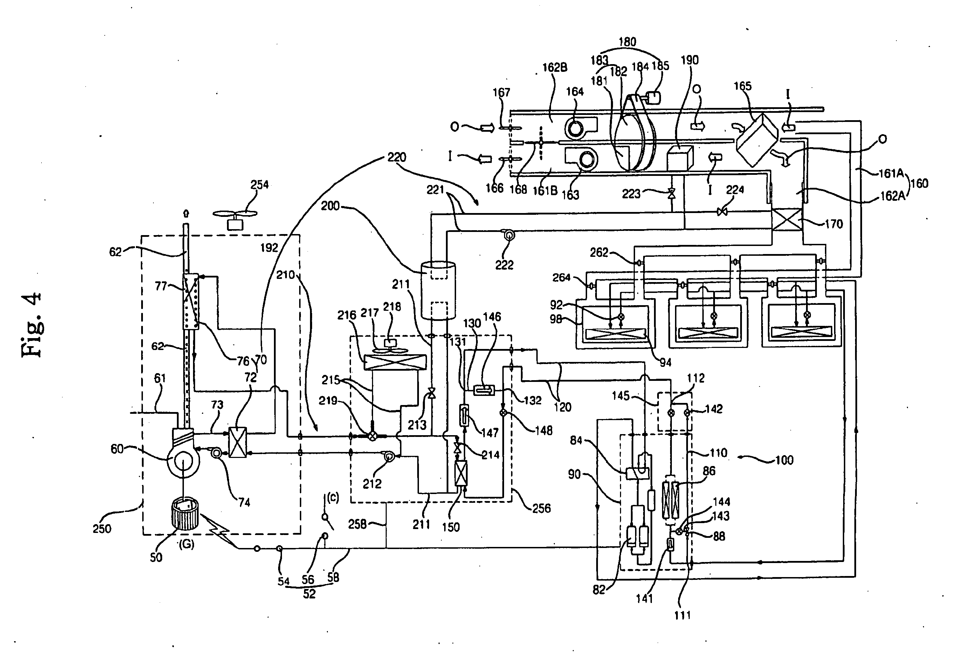

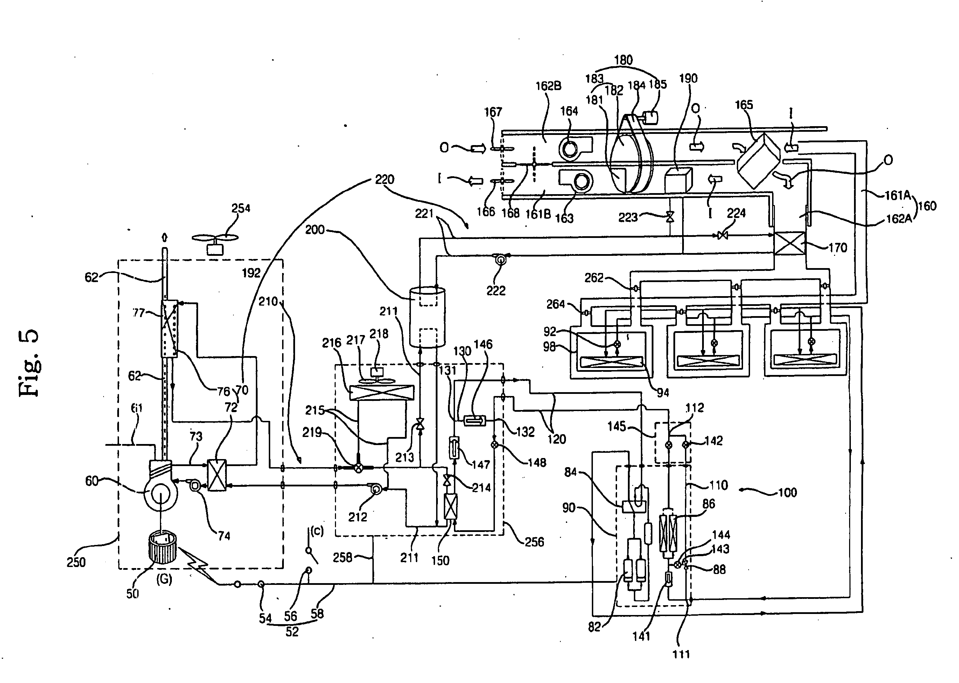

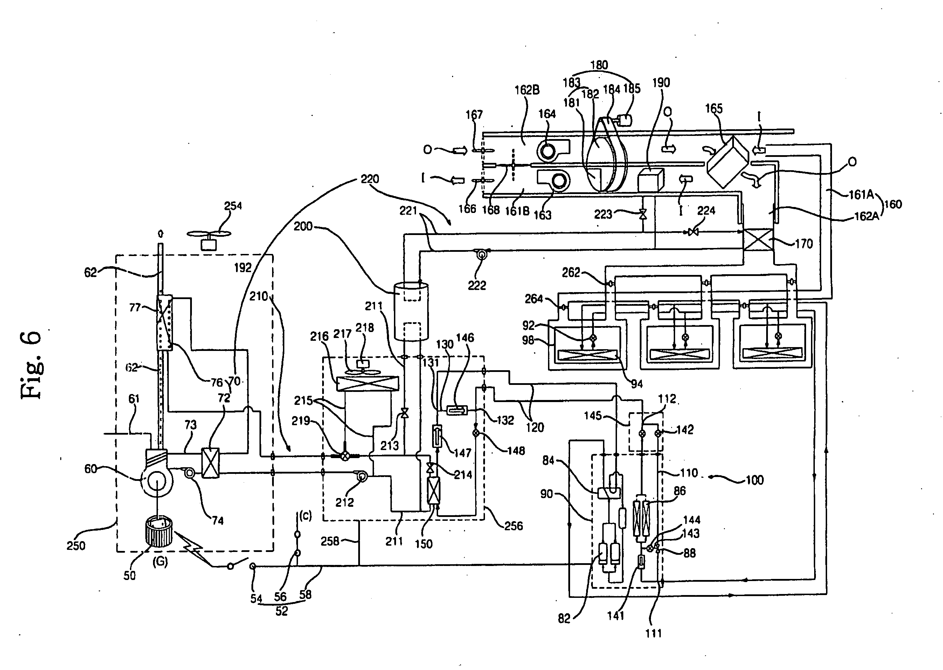

FIG. 2 is a schematic diagram of a cogeneration system according to an exemplary embodiment of the present invention, illustrating a state in which the cogeneration system operates in cooling mode under a condition of a high indoor operation load. FIG. 3 is a schematic diagram of the cogeneration system according to the exemplary embodiment of the present invention, illustrating a state in which the cogeneration system operates in cooling mode under a condition of a low indoor operation load. FIG. 4 is a schematic diagram of the cogeneration system according to the exemplary embodiment of the present invention, illustrating a state in which the cogeneration system operates in heating mode under a condition of a low outdoor temperature. FIG. 5 is a schematic diagram of the cogeneration system according to the exemplary embodiment of the present invention, illustrating a state in which the cogeneration system operates in heating mode under conditions of a high outdoor temperature and a high indoor operation load. FIG. 6 is a schematic diagram of the cogeneration system according to the exemplary embodiment of the present invention, illustrating a state in which the cogeneration system operates in heating mode under conditions of a high outdoor temperature and a low indoor operation load.

As shown in FIGS. 2 to 6, the cogeneration system according to the exemplary embodiment of the present invention includes a generator 50 which generates electricity, a drive source 60 which operates to drive the generator 50, and generates waste heat during the operation thereof, and a heat pump type air conditioner 100 which includes an outdoor unit 90 and indoor units 98. The outdoor unit 90 includes compressors 82, a 4-way valve 84, outdoor heat exchangers 86, and an outdoor expansion device 88. Each indoor unit 98 includes an indoor expansion device 92 and an indoor heat exchanger 94. The cogeneration system also includes a waste heat supplying heat exchanger 150 which supplies the waste heat of the drive source 60 to the heat pump type air conditioner 100, to cause a refrigerant in the heat pump type air conditioner 100 to be evaporated by the supplied waste heat, and an auxiliary heating heat exchanger 170 and a dehumidifier 180 which are arranged in a ventilation line 160 for ventilating indoor air I. The cogeneration system further includes a regeneration heat supplying heat exchanger 190 which supplies regeneration heat to the dehumidifier 180, to cause the dehumidifier 180 to be regenerated, and a waste heat transfer unit 192 which recovers the waste heat of the drive source 60, and transfers the recovered waste heat to at least one of the waste heat supplying heat exchanger 150, auxiliary heating heat exchanger 170, and regeneration heat supplying heat exchanger 190.

The generator 50 may be an AC generator or a DC generator. The generator 50 includes a rotor coupled to an output shaft of the drive source 60 so that the generator 50 generates electric power during rotation of the output shaft.

The cogeneration system further includes a power switching device 52 which performs a switching operation to select one of electricity G generated from the generator 50 (hereinafter, referred to as "internally-generated electricity") and commercial electricity C such that the selected electricity G or C is supplied to the heat pump type air conditioner 100.

The electricity switching device 52 includes a first power switch 54 which performs a switching operation to supply or cut off the internally-generated electricity G, a second power switch 56 which performs a switching operation to supply or cut off the commercial electricity C, and a power line 58 to which the first and second power switch 54 and 56 are connected in parallel.

When the heat pump type air conditioner 100 operates in cooling mode under the condition in which the operation load of the indoor units 98 is high, the power switching device 52 supplies the internally-generated electricity G to the heat pump type air conditioner 100, as shown in FIG. 2. On the other hand, when the heat pump type air conditioner 100 operates in cooling mode under the condition in which the operation load of the indoor units 98 is low, the power switching device 52 supplies the commercial electricity C to the heat pump type air conditioner 100, as shown in FIG. 3.

Also, when the heat pump type air conditioner 100 operates in heating mode under the condition in which the outdoor temperature is lower than a predetermined temperature, or under the condition in which the outdoor temperature is not lower than the predetermined temperature, and the operation load of the indoor units 98 is high, the power switching device 52 supplies the internally-generated electricity G to the heat pump type air conditioner 100, as shown in FIGS. 4 and 5. On the other hand, when the heat pump type air conditioner 100 operates in heating mode under the condition in which the outdoor temperature is not lower than the predetermined temperature, and the operation load of the indoor units 98 is low, the power switching device 52 supplies the commercial electricity C to the heat pump type air conditioner 100, as shown in FIG. 6.

Here, the operation load of the indoor units 98, on which the switching operation of the power switching device 52 depends, may be determined based on the number of the indoor units 98 which are in operation, or based on the operation capacity of the compressors 82 corresponding to the number of the indoor units 98 which are in operation.

Also, the outdoor temperature, on which the switching operation of the power switching device 52 depends, is sensed by a temperature sensor (not shown) attached to the outdoor unit 90.

The drive source 60 comprises a fuel cell or an engine which operates using fuel such as liquefied gas or liquefied petroleum gas. The following description will be given only in conjunction with the case in which the drive source 60 comprises an engine.

A fuel supply tube 61 and an exhaust conduit 62 are connected to the engine 60. The fuel supply tube 61 is adapted to supply fuel such as liquefied gas or liquefied petroleum gas to the engine 60. The exhaust conduit 62 is adapted to discharge exhaust gas generated from the engine 60.

The heat pump type air conditioner 100 may include one outdoor unit 90 and one indoor unit 98, may include one outdoor unit 90 and a plurality of indoor units 98, or may include a plurality of outdoor units 90 and a plurality of indoor units 98. The following description will be given only in conjunction with the case in which the heat pump type air conditioner 100 includes one outdoor unit 90 and a plurality of indoor units 98.

When the heat pump type air conditioner 100 operates in cooling mode, the cogeneration system establishes a cycle in which a refrigerant compressed in the compressors 82 passes through the 4-way valve 84, outdoor heat exchangers 86, indoor expansion devices 92, and indoor heat exchangers 94, in this order, and returns to the compressors 82 via the 4-way valve 84, as shown in FIGS. 2 and 3. This cycle will be referred to as a "cooling cycle" hereinafter.

In this operation mode of the cogeneration system, the outdoor heat exchangers 86 function as condensers, whereas the indoor heat exchangers 94 function as evaporators. The indoor units 98 cool indoor spaces where the indoor units 98 are installed, respectively.

On the other hand, when the heat pump type air conditioner 100 operates in heating mode under the condition in which the outdoor temperature is lower than the predetermined temperature, the cogeneration system establishes a cycle in which the refrigerant compressed in the compressors 82 passes through the 4-way valve 84, indoor heat exchangers 94, indoor expansion devices 92, outdoor heat expansion device 88, and waste heat supplying heat exchanger 150, in this order, and returns to the compressors 82 via the 4-way valve 84, as shown in FIG. 4. This cycle will be referred to as a "low-outdoor-temperature-associated heating cycle" hereinafter.

In this operation mode of the cogeneration system, the indoor heat exchangers 94 function as condensers, whereas the waste heat supplying heat exchanger 150 functions as an evaporator. In this case, the waste heat supplying heat exchanger 150 provides a constant heating capacity irrespective of a variation in outdoor temperature. The indoor units 98 heat the associated indoor spaces, respectively.

Also, when the heat pump type air conditioner 100 operates in heating mode under the condition in which the outdoor temperature is not lower than the predetermined temperature, the cogeneration system establishes a cycle in which the refrigerant compressed in the compressors 82 passes through the 4-way valve 84, indoor heat exchangers 94, indoor expansion devices 92, outdoor heat expansion device 88, outdoor heat exchangers 86, and waste heat supplying heat exchanger 150, in this order, and returns to the compressors 82 via the 4-way valve 84, as shown in FIGS. 5 and 6. This cycle will be referred to as a "high-outdoor-temperature-associated heating cycle" hereinafter.

In this operation mode of the cogeneration system, the indoor heat exchangers 94 function as condensers, whereas the outdoor heat exchangers 86 function as evaporators. In this case, the indoor units 98 heat the associated indoor spaces, respectively.

Meanwhile, the cogeneration system also includes a refrigerant path controller which includes various bypass lines and valves, in order to control and change the flow of the refrigerant.

Hereinafter, the refrigerant path controller, which includes various bypass lines and valves, will be described in detail.

The refrigerant path controller includes an outdoor heat exchanger bypass line 110 which guides the refrigerant expanded in the indoor expansion devices 92 to bypass the outdoor heat exchangers 86, and a waste heat supplying heat exchanger connecting line 120 which guides the refrigerant emerging from the outdoor heat exchanger bypass line 110 to be introduced into the 4-way valve 84 after passing through the waste heat supplying heat exchanger 150. The refrigerant path controller also includes a waste heat supplying heat exchanger bypass line 130 which guides the refrigerant emerging from the 4-way valve 84 to bypass the waste heat supplying heat exchanger 150.

The outdoor expansion device 88 is arranged in the outdoor heat exchanger bypass line 110.

The refrigerant path controller also includes a first cooling-mode check valve 141 arranged between a branching point or inlet 111 of the outdoor heat exchanger bypass line 110 and the outdoor heat exchangers 86, and a first heating-mode control valve 142 arranged in the outdoor heat exchanger bypass line 110. The refrigerant path controller further includes a connecting line 143 which has one end connected between the outdoor expansion device 88 and the first heating-mode control valve 142, and the other end connected between the outdoor heat exchanger 86 and the first heating-mode check valve 141, so as to guide the refrigerant expanded in the outdoor expansion device 88 into the outdoor heat exchangers 86, and thus, to cause the expanded refrigerant to be evaporated while passing through the outdoor heat exchangers 86. The refrigerant path controller further includes a second heating-mode control valve 144 arranged in the connecting line 143, and a first cooling-mode control valve 145 arranged between the outdoor heat exchangers 86 and a joining point or outlet 112 of the outdoor heat exchanger bypass line 110.

The first heating-mode control valve 142 is closed when the heat pump type air conditioner operates in cooling mode, as shown in FIGS. 2 and 3, and is opened when the heat pump type air conditioner operates in heating mode under the condition in which the outdoor temperature is low, as shown in FIG. 4. The first heating-mode control valve 142 is also closed when the heat pump type air conditioner operates in heating mode under the condition in which the outdoor temperature is high, as shown in FIGS. 5 and 6.

The second heating-mode control valve 144 is closed when the heat pump type air conditioner operates in cooling mode, as shown in FIGS. 2 and 3, or when the heat pump type air conditioner operates in heating mode under the condition in which the outdoor temperature is low, as shown in FIG. 4. The second heating-mode control valve 144 is opened when the heat pump type air conditioner operates in heating mode under the condition in which the outdoor temperature is high, as shown in FIGS. 5 and 6.

The first cooling-mode control valve 145 is opened when the heat pump type air conditioner operates in cooling mode, as shown in FIGS. 2 and 3, and is closed when the heat pump type air conditioner operates in heating mode under the condition in which the outdoor temperature is low, as shown in FIG. 4. The first cooling-mode control valve 145 is also opened when the heat pump type air conditioner operates in heating mode under the condition in which the outdoor temperature is high, as shown in FIGS. 5 and 6.

The refrigerant path controller further includes a second cooling-mode check valve 146 arranged in the waste heat supplying heat exchanger bypass line 130, a heating-mode check valve 147 arranged between the waste heat supplying heat exchanger 150 and a branching point or inlet 131 of the waste heat supplying heat exchanger bypass line 130, and a third heating-mode control valve 148 arranged between the waste heat supplying heat exchanger 150 and a joining point or outlet 132 of the waste heat supplying heat exchanger bypass line 130.

The third heating-mode control valve 148 is closed when the heat pump type air conditioner operates in cooling mode, as shown in FIGS. 2 and 3, and is opened when the heat pump type air conditioner operates in heating mode, as shown in FIGS. 4 to 6.

The waste heat supplying heat exchanger 150 functions as an evaporator for evaporating the refrigerant of the heat pump type air conditioner 100 using the waste heat recovered from the drive source 60. To this end, the waste heat supplying heat exchanger connecting line 120 extends through the waste heat supplying heat exchanger 150. Also, a recoverer-side heat medium circulation line 211, which will be described hereinafter, extends through the waste heat supplying heat exchanger 150.

The ventilation line 160 includes air discharge ducts 161A and 161B which guide indoor air I to the atmosphere, and air supply ducts 162A and 162B which guide outdoor air O into the indoor spaces.

The cogeneration system further includes an air discharge blower 163 arranged in the air discharge duct 161A or 161B (the air discharge duct 161B in the illustrated case), an air supply blower 164 arranged in the air supply duct 162A or 162B (the air supply duct 162B in the illustrated case), and a heat-transferring heat exchanger 165 which heat-exchanges indoor air I passing through the air discharge ducts 161A and 161B with outdoor air O passing through the air supply ducts 162A and 162B.

The air discharge duct 161A extends between the indoor spaces and the heat-transferring heat exchanger 165. The air discharge duct 161A will be referred to as an indoor-side air discharge duct 161A. The air discharge duct 161B extends between the heat-transferring heat exchanger 165 and the atmosphere. The air discharge duct 161B will be referred to as an outdoor-side air discharge duct 161B.

The indoor-side air discharge duct 161A has branched portions open to respective indoor spaces. Of course, a plurality of indoor-side air discharge ducts may be used which are open to respective indoor spaces. The following description will be given only in conjunction with the case in which the indoor-side air discharge duct 161A has branched portions.

The air supply duct 162A extends between the indoor spaces and the heat-transferring heat exchanger 165. The air supply duct 162A will be referred to as an indoor-side air supply duct 162A. The air supply duct 162B extends between the heat-transferring heat exchanger 165 and the atmosphere. The air supply duct 162B will be referred to as an outdoor-side air supply duct 162B.

The indoor-side air supply duct 162A has branched portions open to respective indoor spaces. Of course, a plurality of indoor-side air supply ducts may be used which are open to respective indoor spaces. The following description will be given only in conjunction with the case in which the indoor-side air supply duct 162A has branched portions.

The cogeneration system further includes an outer air discharge damper 166 which opens/closes the air discharge ducts 161A and 161B, an outer air supply damper 167 which opens/closes the air supply ducts 162A and 162B, and an inner circulation damper 168 which connects/disconnects the air discharge ducts 161A and 161B and the air supply ducts 162A and 162B.

The outer air discharge damper 166 is arranged in the outdoor-side air discharge duct 161B.

The outer air supply damper 167 is arranged in the outdoor-side air supply duct 162B.

The inner circulation damper 168 is arranged between the outdoor-side air discharge duct 161B and the outdoor-side air supply duct 162B.

When the heat pump type air conditioner operates in ventilation mode, the outer air discharge damper 166 and outer air supply damper 167 are opened, and the inner circulation damper 168 disconnects the air discharge ducts 161A and 161B and the air supply ducts 162A and 162B.

On the other hand, when the heat pump type air conditioner operates in a mode other than the ventilation mode, the outer air discharge damper 166 and outer air supply damper 167 are closed, and the inner circulation damper 168 connects the air discharge ducts 161A and 161B and the air supply ducts 162A and 162B.

The auxiliary heating heat exchanger 170 is arranged in the air supply duct 162A or 162B, in particular, the indoor-side air supply duct 162A.

The dehumidifier 180 includes a desiccant wheel 183 which has two wheel portions 181 and 182 respectively arranged in the outdoor-side air discharge duct 161B and outdoor-side air supply duct 162B, and a wheel rotator which turns the desiccant wheel 183 such that the positions of the wheel portions 181 and 182 are reversed.

The desiccant wheel 183 extends across the outdoor-side air discharge duct 161B and outdoor-side air supply duct 162B.

The wheel rotator may include a belt 184 which is wound around the desiccant wheel 183, and a motor 185 which drives the belt 184. Alternatively, the wheel rotator may include a motor which is directly connected to the desiccant wheel 183, to turn the desiccant wheel 183. The following description will be given only in conjunction with the case in which the wheel rotator includes the belt 184 and motor 185.

The regeneration heat supplying heat exchanger 190 is arranged in the air discharge duct 161A or 161B, in particular, the outdoor-side air discharge duct 161B.

The waste heat transfer unit 192 may be configured to transfer the waste heat of the drive source 60 to one of the waste heat supplying heat exchanger 150, auxiliary heating heat exchanger 170, and regeneration heat supplying heat exchanger 190, or may be configured to transfer the waste heat of the drive source 60 to all of the waste heat supplying heat exchanger 150, auxiliary heating heat exchanger 170, and regeneration heat supplying heat exchanger 190. Alternatively, the waste heat transfer unit 192 may be configured to transfer the waste heat of the drive source 60 only to the auxiliary heating heat exchanger 170 and regeneration heat supplying heat exchanger 190. The following description will be given only in conjunction with the case in which the waste heat transfer unit 192 transfers the waste heat of the drive source 60 to all of the waste heat supplying heat exchanger 150, auxiliary heating heat exchanger 170, and regeneration heat supplying heat exchanger 190.

The waste heat transfer unit 192 includes a waste heat recoverer 70 which recovers the waste heat of the drive source 60.

The waste heat recoverer 70 includes a cooling water heat exchanger 72 which absorbs heat from cooling water used to cool the drive source 60, and an exhaust gas heat exchanger 76 which absorbs heat from exhaust gas discharged from the drive source 60.

The cooling water heat exchanger 72 is connected to the drive source 60 via a cooling water line 73. A cooling water circulation pump 74 is arranged in the drive source 60 or cooling water line 73.

The cooling water line 73 extends through the cooling water heat exchanger 72. 150. Also, the recoverer-side heat medium circulation line 211, which will be described hereinafter, extends through the cooling water heat exchanger 72.

The exhaust gas heat exchanger 76 is arranged in the exhaust conduit 62 of the drive source 60.

An exhaust gas line 77 extends through the exhaust gas heat exchanger 76. The exhaust gas line 77 constitutes a portion of the exhaust conduit 62. The recoverer-side heat medium circulation line 211 also extends through the exhaust gas heat exchanger 76.

The waste heat transfer unit 192 further includes a thermal storage tank 200 which stores the waste heat recovered by the waste heat recoverer 70, in order to supply the stored heat to at least one of the auxiliary heating heat exchanger 170 and regeneration heat supplying heat exchanger 190.

The thermal storage tank 200 stores the waste heat recovered by the waste heat recoverer 70, and supplies the stored heat to the auxiliary heating heat exchanger 170 during the heating operation of the heat pump type air conditioner 100, to heat the auxiliary heating heat exchanger 170. During the cooling operation of the heat pump type air conditioner 100, the thermal storage tank 200 supplies the stored heat to the regeneration heat supplying heat exchanger 190, to heat the regeneration heat supplying heat exchanger 190.

The waste heat transfer unit 192 further includes a first waste heat supplier 210 which supplies the waste heat recovered by the waste heat recover 70 to the waste heat supplying heat exchanger 150 or thermal storage tank 200.

The above-described recoverer-side heat medium circulation line 211 is included in the first waste heat supplier 210. The recoverer-side heat medium circulation line 211 guides the heat medium into one of the thermal storage tank 200 and waste heat supplying heat exchanger 150, and into the waste heat recoverer 70. The first waste heat supplier 210 also includes a recoverer-side heat medium circulation pump 212 which pumps the heat medium, to circulate the heat medium through the recoverer-side heat medium circulation line 211, and a first heat medium supply valve 213 which is arranged in the recoverer-side heat medium circulation line 211, to open/close the recoverer-side heat medium circulation line 211, and thus, to selectively allow the heat medium emerging from the waste heat recoverer 70 to be supplied to the thermal storage tank 200. The first waste heat supplier 210 further includes a second heat medium supply valve 214 which is arranged in the recoverer-side heat medium circulation line 211, to open/close the recoverer-side heat medium circulation line 211, and thus, to selectively allow the heat medium emerging from the waste heat recoverer 70 to be supplied to the waste heat supplying heat exchanger 150.

The first heat medium supply valve 213 is opened when the heat pump type air conditioner 100 operates in cooling mode, as shown in FIGS. 2 and 3, or when the heat pump type air conditioner 100 operates in heating mode under the condition in which the outdoor temperature is not lower than a predetermined temperature, as shown in FIGS. 5 and 6.

The first heat medium supply valve 213 is closed when the heat pump type air conditioner 100 operates in heating mode under the condition in which the outdoor temperature is lower than the predetermined temperature, as shown in FIG. 4.

On the other hand, the second heat medium supply valve 214 is opened when the heat pump type air conditioner 100 operates in heating mode under the condition in which the outdoor temperature is lower than the predetermined temperature, as shown in FIG. 4.

The second heat medium supply valve 214 is closed when the heat pump type air conditioner 100 operates in cooling mode, as shown in FIGS. 2 and 3, or when the heat pump type air conditioner 100 operates in heating mode under the condition in which the outdoor temperature is not lower than the predetermined temperature, as shown in FIGS. 5 and 6.

The cogeneration system further includes a radiating heat exchanger 216 which is connected to the recoverer-side heat medium circulation line 211 via a radiating line 215, a radiating fan 217 which blows outdoor air to the radiating heat exchanger 216, a motor 218 which drives the radiating fan 217, and a 3-way valve 219 which is arranged at a branching point or inlet of the radiating line 216.

Meanwhile, the waste heat transfer unit 192 further includes a second waste heat supplier 220 which supplies the waste heat stored in the thermal storage tank 200 to the auxiliary heating heat exchanger 170 or regeneration heat supplying heat exchanger 190.

The second waste heat supplier 220 includes a tank-side heat medium circulation line 221 which guides the heat medium into one of the regeneration heat supplying heat exchanger 190 and auxiliary heating heat exchanger 170, and into the thermal storage tank 200, a tank-side heat medium circulation pump 222 which pumps the heat medium, to circulate the heat medium through the tank-side heat medium circulation line 221, and a third heat medium supply valve 223 which is arranged in the tank-side heat medium circulation line 221, to open/close the tank-side heat medium circulation line 221, and thus, to selectively allow the heat medium emerging from the thermal storage tank 200 to be supplied to the regeneration heat supplying heat exchanger 190. The second waste heat supplier 220 also includes a fourth heat medium supply valve 224 which is arranged in the tank-side heat medium circulation line 221, to open/close the tank-side heat medium circulation line 221, and thus, to selectively allow the heat medium emerging from the thermal storage tank 200 to be supplied to the auxiliary heating heat exchanger 170.

The third heat medium supply valve 223 is opened when the heat pump type air conditioner 100 operates in cooling mode, as shown in FIGS. 2 and 3, and is closed when the heat pump type air conditioner 100 operates in heating mode, as shown in FIGS. 4 to 6.

On the other hand, the fourth heat medium supply valve 224 is opened when the heat pump type air conditioner 100 operates in heating mode under the condition in which the outdoor temperature is not lower than a predetermined temperature, as shown in FIGS. 5 and 6. The fourth heat medium supply valve 224 is closed when the heat pump type air conditioner 100 operates in cooling mode, as shown in FIGS. 2 and 3, or when the heat pump type air conditioner 100 operates in heating mode under the condition in which the outdoor temperature is lower than the predetermined temperature, as shown in FIG. 4.

In FIGS. 2 to 6, reference numeral 250 designates a main unit in which the generator 50, drive source 60, cooling water heat exchanger 72, and exhaust gas heat exchanger 77 are arranged, and through which a portion of the recoverer-side heat medium circulation line 211 extends.

Also, reference numeral 252 designates a ventilation fan arranged for ventilation of the main unit, and reference numeral 254 designates a motor which drives the ventilation fan 252.

Reference numeral 256 designates a sub unit in which the waste heat supplying heat exchanger 150, recoverer-side heat medium circulation pump 212, first heat medium supply valve 213, second heat medium supply valve 214, second cooling-mode check valve 146, heating-mode check valve 147, third heating-mode control valve 148, radiating heat exchanger 216, radiating fan 217, and motor 218 are arranged.

Reference numeral 258 designates a sub unit power line which connects the power line 58 and sub unit 256, to enable one of the internally-generated electricity G and commercial electricity C to be supplied to the sub unit 256.

Reference numeral 262 designates an air supply damper which is arranged in each branched portion of the indoor-side air supply duct 162A, and reference numeral 264 designates an air discharge damper which is arranged in each branched portion of the indoor-side air discharge duct 161A.

Hereinafter, operation of the cogeneration system having the above-described configuration will be described.

When the heat pump type air conditioner 100 operates in cooling mode, the cogeneration system first determines the indoor operation load of the heat pump type air conditioner 100, and operates in operation mode based on the determined indoor operation load.

When it is determined that the indoor operation load is a high cooling load, the cogeneration system supplies the electricity generated from the generator 50 in accordance with operation of the drive source 60, namely, the internally-generated electricity G, to the heat pump type air conditioner 100, as shown in FIG. 2, in order to minimize the consumption of electricity. In this case, the cogeneration system also supplies waste heat generated during the operation of the drive source 60 to the regeneration heat supplying heat exchanger 190, in order to minimize the indoor dehumidification load of the heat pump type air conditioner 100. On the other hand, when it is determined that the indoor operation load is a low cooling load, the cogeneration system supplies commercial electricity C to the heat pump type air conditioner 100, in order to minimize the consumption of fuel. In the case, the cogeneration system also supplies heat stored in the thermal storage tank 200 to the regeneration heat supplying heat exchanger 190, in order to minimize the indoor dehumidification load of the heat pump type air conditioner 100.

Hereinafter, operation of the cogeneration system carried out when the indoor operation load is a high cooling load will be described in more detail.

When the indoor operation load is a high cooling load, the cogeneration system drives the drive source 60, turns on the first power switch 54 which performs a switching operation to supply or cut off the internally-generated electricity G, and turns off the second power switch 56 which performs a switching operation to supply or cut off the commercial electricity C, as shown in FIG. 2.

In accordance with operation of the drive source 60, the rotor of the generator 50 is rotated, so that the generator 50 generates electricity G. The generated electricity G is supplied to the heat pump type air conditioner 100 and sub unit 256 via the power line 58, as shown in FIG. 2.

During the operation of the drive source 60, waste heat of cooling water used to cool the drive source 60 is recovered by the cooling water heat exchanger 72, and waste heat of exhaust gas generated in the drive source 60 is recovered by the exhaust gas heat exchanger 76.

In this case, the cogeneration system drives the recoverer-side heat medium circulation pump 212, and opens the first heat medium supply valve 213 which selectively allows the supply of heat medium in the recoverer-side heat medium circulation line 211 to the thermal storage tank 200. The cogeneration system also closes the second heat medium supply valve 214 which selectively allows the supply of heat medium in the recoverer-side heat medium circulation line 211 to the waste heat supplying heat exchanger 150.

During the operation of the recoverer-side heat medium circulation pump 212, the heat medium in the recoverer-side heat medium circulation line 211 is heated by the cooling water heat exchanger 72 and exhaust gas heat exchanger 76 while passing through the heat exchangers 72 and 76, in this order, as shown in FIG. 2. The heated heat medium is then introduced into the thermal storage tank 200 via the first heat medium supply valve 213, so that the thermal storage tank 200 is heated, thereby storing heat.

In this case, the 3-way valve 219 guides a part of the heat medium, which emerges from the exhaust gas heat exchanger 76 after passing through the cooling water heat exchanger 72, to the radiating heat exchanger 216. Otherwise, the 3-way valve 219 guides the entire portion of the heat medium to the thermal storage tank 200.

Meanwhile, the cogeneration system drives the tank-side heat medium circulation pump 222, and opens the third heat medium supply valve 223 which selectively allows the supply of the heat medium in the tank-side heat medium circulation line 221 to the regeneration heat supplying heat exchanger 190. The cogeneration system also closes the fourth heat medium supply valve 224 which selectively allows the supply of the heat medium in the tank-side heat medium circulation line 221 to the auxiliary heating heat exchanger 170.

During the operation of the tank-side heat medium circulation pump 222, the heat medium in the tank-side heat medium circulation line 221 is introduced into the thermal storage tank 200, and is heated by heat stored in the thermal storage tank 200, as shown in FIG. 2. The heated heat medium is then introduced into the regeneration heat supplying heat exchanger 190 via the third heat medium supply valve 223. The regeneration heat supplying heat exchanger 190 is heated by the introduced heat medium, thereby heating the portion 181 of the desiccant wheel 183. Thus, the portion 181 of the desiccant wheel 183 is regenerated.

Hereinafter, operation of the cogeneration system carried out when the indoor operation load is a low cooling load will be described in more detail.

When the indoor operation load is a low cooling load, the cogeneration system stops the operation of the drive source 60, turns on the second power switch 56 for the commercial electricity C, and turns off the first power switch 54 for the internally-generated electricity G, as shown in FIG. 3.

In this case, the commercial electricity C is supplied to the heat pump type air conditioner 100 and sub unit 256 via the power line 58, as shown in FIG. 3.

The cogeneration system also stops the operation of the recoverer-side heat medium circulation pump 212.

Meanwhile, the cogeneration system drives the tank-side heat medium circulation pump 222, and opens the third heat medium supply valve 223. The cogeneration system also closes the fourth heat medium supply valve 224.

During the operation of the tank-side heat medium circulation pump 222, the heat medium in the tank-side heat medium circulation line 221 is introduced into the thermal storage tank 200, and is heated by heat stored in the thermal storage tank 200, as shown in FIG. 3. The heated heat medium is then introduced into the regeneration heat supplying heat exchanger 190 via the third heat medium supply valve 223. The regeneration heat supplying heat exchanger 190 is heated by the introduced heat medium, thereby heating the portion 181 of the desiccant wheel 183. Thus, the portion 181 of the desiccant wheel 183 is regenerated.

Meanwhile, when the heat pump type air conditioner 100 operates in cooling mode, the cogeneration system controls the refrigerant path controller to establish a cooling cycle, irrespective of the level of the indoor operation mode.

In the cooling mode of the heat pump type air conditioner 100, as shown in FIGS. 2 and 3, the refrigerant, which has been compressed in the compressors 82, passes through the 4-way valve 84, outdoor heat exchangers 86, indoor expansion devices 92, and indoor heat exchangers 94, in this order, and then returns to the compressors 82 via the 4-way valve 84. In this case, the indoor heat exchangers 94 function as evaporators, so that the indoor units 98 cool the associated indoor spaces, respectively.

On the other hand, when the heat pump type air conditioner 100 operates in cooling and ventilation mode, as shown in FIGS. 2 and 3, the cogeneration system opens the outer air discharge damper 166 and outer air supply damper 167, and closes the inner circulation damper 168. The cogeneration system also drives the air supply blower 164, the air discharge blower 163, and the motor 185 of the dehumidifier 180.

In this case, a part of the indoor air I is introduced into the indoor-side air discharge duct 161A, and is then heated while passing around the heat-transferring heat exchanger 165. The heated air passes around the portion 181 of the desiccant wheel 183, and is then discharged to the atmosphere via the outdoor-side air discharge duct 161B.

Meanwhile, outdoor air O is introduced into the outdoor-side air supply duct 162B, and is then dehumidified while passing around the portion 182 of the desiccant wheel 183. The dehumidified air is cooled while passing around the heat-transferring heat exchanger 165, and is then introduced into the indoor spaces after passing around the auxiliary heating heat exchanger 170 without heat-exchanging with the auxiliary heating heat exchanger 170.

On the other hand, when the heat pump type air conditioner 100 operates only in cooling mode without operating in ventilation mode, the cogeneration system closes the outer air discharge damper 166 and outer air supply damper 167, and opens the inner circulation damper 168. The cogeneration system also drives the air supply blower 164, the air discharge blower 163, and the motor 185 of the dehumidifier 180.

In this case, a part of the indoor air I is introduced into the indoor-side air discharge duct 161A, and then passes around the heat-transferring heat exchanger 165 and the portion 181 of the desiccant wheel 183, in this order. The air is then introduced into the outdoor-side air supply duct 162B without being discharged to the atmosphere via the outdoor-side air discharge duct 161B.

The air I introduced into the outdoor-side air supply duct 162B without being discharged to the atmosphere is dehumidified while passing around the portion 182 of the desiccant wheel 183. The dehumidified air passes around the heat-transferring heat exchanger 165, and then re-enters the indoor spaces after passing around the auxiliary heating heat exchanger 170 without heat-exchanging with the auxiliary heating heat exchanger 170.

On the other hand, when the heat pump type air conditioner 100 operates in heating mode under the condition in which the outdoor temperature is lower than a predetermined temperature, the cogeneration system drives the drive source 60, turns on the first power switch 54 for the internally-generated electricity G, and turns off the second power switch 56 for the commercial electricity C, as shown in FIG. 4.

In accordance with operation of the drive source 60, the rotor of the generator 50 is rotated, so that the generator 50 generates electricity G. The generated electricity G is supplied to the heat pump type air conditioner 100 and sub unit 256 via the power line 58, as shown in FIG. 4.

During the operation of the drive source 60, the waste heat of the cooling water used to cool the drive source 60 is recovered by the cooling water heat exchanger 72, and the waste heat of the exhaust gas generated in the drive source 60 is recovered by the exhaust gas heat exchanger 76.

In this case, the cogeneration system drives the recoverer-side heat medium circulation pump 212, and closes the first heat medium supply valve 213. The cogeneration system also opens the second heat medium supply valve 214.

During the operation of the recoverer-side heat medium circulation pump 212, the heat medium in the recoverer-side heat medium circulation line 211 is heated by the cooling water heat exchanger 72 and exhaust gas heat exchanger 76 while passing through the heat exchangers 72 and 76, in this order, as shown in FIG. 4. The heated heat medium is then introduced into the waste heat supplying heat exchanger 150 via the second heat medium supply valve 214, so that the waste heat supplying heat exchanger 150 is heated.

In this case, the 3-way valve 219 guides a part of the heat medium, which emerges from the exhaust gas heat exchanger 76 after passing through the cooling water heat exchanger 72, to the radiating heat exchanger 216. Otherwise, the 3-way valve 219 guides the entire portion of the heat medium to the waste heat supplying heat exchanger 150.

Meanwhile, when the heat pump type air conditioner 100 operates in heating mode under the condition in which the outdoor temperature is lower than a predetermined temperature, the cogeneration system controls the refrigerant path controller to establish a low-outdoor-temperature-associated heating cycle.

In this case, as shown in FIG. 4, the refrigerant, which has been compressed in the compressors 82, passes through the 4-way valve 84, indoor heat exchangers 94, indoor expansion devices 92, outdoor expansion device 88, and waste heat supplying heat exchanger 150, in this order, and then returns to the compressors 82 via the 4-way valve 84. In this case, the indoor heat exchangers 94 function as condensers. The waste heat supplying heat exchanger 150 functions as an evaporator as it is heated by the waste heat. As a result, the indoor units 98 heat the associated indoor spaces, respectively.

Thus, the heat pump type air conditioner 100 has a constant heating capacity irrespective of the outdoor temperature because the waste heat supplying heat exchanger 150 functions as an evaporator, in place of the outdoor heat exchangers 86.

On the other hand, when the heat pump type air conditioner 100 operates in heating and ventilation mode under the condition in which the outdoor temperature is lower than the predetermined temperature, the cogeneration system opens the outer air discharge damper 166 and outer air supply damper 167, and closes the inner circulation damper 168. The cogeneration system also drives the air supply blower 164 and air discharge blower 163.

In this case, a part of the indoor air I is introduced into the indoor-side air discharge duct 161A, and is then cooled while passing around the heat-transferring heat exchanger 165. The cooled air passes around the portion 181 of the desiccant wheel 183, and is then discharged to the atmosphere via the outdoor-side air discharge duct 161B.

Meanwhile, outdoor air O is introduced into the outdoor-side air supply duct 162B, and then passes around the portion 182 of the desiccant wheel 183. The air is then heated while passing around the heat-transferring heat exchanger 165. The heated air is introduced into the indoor spaces after passing around the auxiliary heating heat exchanger 170 without heat-exchanging with the auxiliary heating heat exchanger 170.

On the other hand, when the heat pump type air conditioner 100 operates in heating mode without operating in ventilation mode, under the condition in which the outdoor temperature is lower than the predetermined temperature, the cogeneration system closes the outer air discharge damper 166 and outer air supply damper 167, and opens the inner circulation damper 168. The cogeneration system also drives the air supply blower 164 and air discharge blower 163.

In this case, a part of the indoor air I is introduced into the indoor-side air discharge duct 161A, and then passes around the heat-transferring heat exchanger 165 and the portion 181 of the desiccant wheel 183, in this order. The air is then introduced into the outdoor-side air supply duct 162B without being discharged to the atmosphere via the outdoor-side air discharge duct 161B.

The air I introduced into the outdoor-side air supply duct 162B without being discharged to the atmosphere passes around the portion 182 of the desiccant wheel 183. Thereafter, the air passes around the heat-transferring heat exchanger 165, and then re-enters the indoor spaces after passing around the auxiliary heating heat exchanger 170 without heat-exchanging with the auxiliary heating heat exchanger 170.

Meanwhile, when the heat pump type air conditioner 100 operates in heating mode under the condition in which the outdoor temperature is lower than the predetermined temperature, as described above, the cogeneration system may also open the first heat medium supply valve 213, in order to store the waste heat remaining in the waste heat supplying heat exchanger 150.

On the other hand, when the heat pump type air conditioner 100 operates in heating mode under the condition in which the outdoor temperature is not lower than the predetermined temperature, the cogeneration system determines the indoor operation load of the heat pump type air conditioner 100, and operates in an operation mode determined based on the determined indoor operation load.

That is, when the heat pump type air conditioner 100 operates in heating mode under the condition in which the indoor operation load is high, and the outdoor temperature is high, the cogeneration system supplies the electricity generated from the generator 50, namely, the internally-generated electricity G, to the heat pump type air conditioner 100, in order to minimize the consumption of electricity, as shown in FIG. 5. In this case, the cogeneration system also supplies waste heat generated during the operation of the drive source 60 to the auxiliary heating heat exchanger 170, in order to minimize the indoor heating load of the heat pump type air conditioner 100. On the other hand, when the heat pump type air conditioner 100 operates in heating mode under the condition in which the indoor operation load is low, and the outdoor temperature is high, the cogeneration system supplies commercial electricity C to the heat pump type air conditioner 100, in order to minimize the consumption of fuel, as shown in FIG. 6. In the case, the cogeneration system also supplies heat stored in the thermal storage tank 200 to the auxiliary heating heat exchanger 170, in order to minimize the indoor heating load of the heat pump type air conditioner 100.

Hereinafter, operation of the cogeneration system carried out when the heat pump type air conditioner 100 operates in heating mode under the condition in which the indoor operation load is high, and the outdoor temperature is high will be described in more detail.

In this case, the cogeneration system drives the drive source 60, turns on the first power switch 54 for the internally-generated electricity G, and turns off the second power switch 56 for the commercial electricity C, as shown in FIG. 5.

In accordance with operation of the drive source 60, the rotor of the generator 50 is rotated, so that the generator 50 generates electricity G. The generated electricity G is supplied to the heat pump type air conditioner 100 and sub unit 256 via the power line 58, as shown in FIG. 5.

During the operation of the drive source 60, the waste heat of the cooling water used to cool the drive source 60 is recovered by the cooling water heat exchanger 72, and the waste heat of the exhaust gas generated in the drive source 60 is recovered by the exhaust gas heat exchanger 76.

In this case, the cogeneration system drives the recoverer-side heat medium circulation pump 212, and opens the first heat medium supply valve 213. The cogeneration system also closes the second heat medium supply valve 214.

During the operation of the recoverer-side heat medium circulation pump 212, the heat medium in the recoverer-side heat medium circulation line 211 is heated by the cooling water heat exchanger 72 and exhaust gas heat exchanger 76 while passing through the heat exchangers 72 and 76, in this order, as shown in FIG. 5. The heated heat medium is then introduced into the thermal storage tank 200 via the first heat medium supply valve 213, so that the thermal storage tank 200 is heated, thereby storing heat.

In this case, the 3-way valve 219 guides a part of the heat medium, which emerges from the exhaust gas heat exchanger 76 after passing through the cooling water heat exchanger 72, to the radiating heat exchanger 216. Otherwise, the 3-way valve 219 guides the entire portion of the heat medium to the thermal storage tank 200.

Meanwhile, the cogeneration system drives the tank-side heat medium circulation pump 222, and closes the third heat medium supply valve 223. The cogeneration system also opens the fourth heat medium supply valve 224.

During the operation of the tank-side heat medium circulation pump 222, the heat medium in the tank-side heat medium circulation line 221 is introduced into the thermal storage tank 200, and is heated by heat stored in the thermal storage tank 200, as shown in FIG. 5. The heated heat medium is then introduced into the auxiliary heating heat exchanger 170 via the fourth heat medium supply valve 224, so that the auxiliary heating heat exchanger 170 is heated.

Hereinafter, operation of the cogeneration system carried out when the heat pump type air conditioner 100 operates in heating mode under the condition in which the indoor operation load is low, and the outdoor temperature is high will be described in more detail.

In this case, the cogeneration system stops the operation of the drive source 60, and turns on the second power switch 56 for the commercial electricity C, and turns off the first power switch 54 for the internally-generated electricity G, as shown in FIG. 6.

The commercial electricity C is supplied to the heat pump type air conditioner 100 and sub unit 256 via the power line 58, as shown in FIG. 6.

The cogeneration system also stops the operation of the recoverer-side heat medium circulation pump 212.

Meanwhile, the cogeneration system drives the tank-side heat medium circulation pump 222, and closes the third heat medium supply valve 223. The cogeneration system also opens the fourth heat medium supply valve 224.

During the operation of the tank-side heat medium circulation pump 222, the heat medium in the tank-side heat medium circulation line 221 is introduced into the thermal storage tank 200, and is heated by heat stored in the thermal storage tank 200, as shown in FIG. 6. The heated heat medium is then introduced into the auxiliary heating heat exchanger 170 via the fourth heat medium supply valve 224, so that the auxiliary heating heat exchanger 170 is heated by the introduced heat medium.

Meanwhile, when the heat pump type air conditioner 100 operates in heating mode under the condition in which the outdoor temperature is high, the cogeneration system controls the refrigerant path controller to establish a high-outdoor-temperature-associated heating cycle, irrespective of the level of the indoor operation load.

In this case, as shown in FIGS. 5 and 6, the refrigerant, which has been compressed in the compressors 82, passes through the 4-way valve 84, indoor heat exchangers 94, indoor expansion devices 92, outdoor expansion device 88, outdoor heat exchangers 86, and waste heat supplying heat exchanger 150, in this order, and then returns to the compressors 82 via the 4-way valve 84. In this case, the indoor heat exchangers 94 function as condensers, and the outdoor heat exchangers 86 function as evaporators. As a result, the indoor units 98 heat the associated indoor spaces, respectively.

Thus, the heat pump type air conditioner 100 has a constant heating capacity irrespective of the outdoor temperature because the waste heat supplying heat exchanger 150 functions as an evaporator, in place of the outdoor heat exchangers 86.

On the other hand, when the heat pump type air conditioner 100 operates in heating and ventilation mode under the condition in which the outdoor temperature is not lower than the predetermined temperature, the cogeneration system opens the outer air discharge damper 166 and outer air supply damper 167, and closes the inner circulation damper 168. The cogeneration system also drives the air supply blower 164 and air discharge blower 163.

In this case, a part of the indoor air I is introduced into the indoor-side air discharge duct 161A, and is then cooled while passing around the heat-transferring heat exchanger 165. The cooled air passes around the portion 181 of the desiccant wheel 183, and is then discharged to the atmosphere via the outdoor-side air discharge duct 161B.

Meanwhile, outdoor air O is introduced into the outdoor-side air supply duct 162B, and then passes around the portion 182 of the desiccant wheel 183. The air is then heated while passing around the heat-transferring heat exchanger 165. The heated air then passes around the auxiliary heating heat exchanger 170 which, in turn, heats the air. The heated air is then introduced into the indoor spaces.

On the other hand, when the heat pump type air conditioner 100 operates in heating mode without operating in ventilation mode, under the condition in which the outdoor temperature is not lower than the predetermined temperature, the cogeneration system closes the outer air discharge damper 166 and outer air supply damper 167, and opens the inner circulation damper 168. The cogeneration system also drives the air supply blower 164 and air discharge blower 163.

In this case, a part of the indoor air I is introduced into the indoor-side air discharge duct 161A, and then passes around the heat-transferring heat exchanger 165 and the portion 181 of the desiccant wheel 183, in this order. The air is then introduced into the outdoor-side air supply duct 162B without being discharged to the atmosphere via the outdoor-side air discharge duct 161B.

The air I introduced into the outdoor-side air supply duct 162B without being discharged to the atmosphere passes around the portion 182 of the desiccant wheel 183. Thereafter, the air passes around the heat-transferring heat exchanger 165, and then re-enters the indoor spaces after being heated by the auxiliary heating heat exchanger 170.

The cogeneration system having the above-described configuration according to the present invention has various effects.

That is, the cogeneration system according to the present invention includes the generator, the drive source for driving the generator, the waste heat supplying heat exchanger for enhancing the heating performance of the heat pump type air conditioner, the auxiliary heating heat exchanger using the waste heat of the drive source as a heat source for heating indoor air, and the regeneration heat supplying heat exchanger using the waste heat of the drive source as a heat source for regenerating the dehumidifier. Accordingly, the cogeneration system can use the waste heat of the drive source for a variety of purposes depending on an indoor environment, and can therefore operate at a maximal energy efficiency.

Also, in the cogeneration system according to the present invention, when the heat pump type air conditioner operates in heating mode under the condition in which the outdoor temperature is low, the refrigerant is evaporated by the waste heat supplying heat exchanger which is heated by the waste heat. Accordingly, the heat pump type air conditioner can have a constant heating capacity irrespective of the outdoor temperature. It is also possible to minimize formation of frost on the outdoor heat exchangers.

Meanwhile, when the heat pump type air conditioner operates in cooling mode under the condition in which the operation load of the indoor units is high, the internally-generated electricity is supplied to the heat pump type air conditioner. On the other hand, when the operation load of the indoor units is low, the commercial electricity is supplied to the heat pump type air conditioner. Accordingly, it is possible to minimize the consumption of energy and the consumption of electricity during the cooling operation of the heat pump type air conditioner.

In addition, when the heat pump type air conditioner operates in heating mode under the condition in which the outdoor temperature is lower than a predetermined temperature, or under the condition in which the outdoor temperature is not lower than the predetermined temperature, and the operation load of the indoor units is high, the internally-generated electricity is supplied to the heat pump type air conditioner. On the other hand, when operation load of the indoor units is low, the commercial electricity is supplied to the heat pump type air conditioner. Accordingly, it is possible to minimize the consumption of energy and the consumption of electricity during the heating operation of the heat pump type air conditioner.

Although the preferred embodiments of the invention have been disclosed for illustrative purposes, those skilled in the art will appreciate that various modifications, additions and substitutions are possible, without departing from the scope of the invention as disclosed in the accompanying claims.

## Claims

1. A cogeneration system comprising:
a generator (50) which generates electricity (G);
a drive source (60) which operates to drive the generator (50), and generates waste heat during the operation of the drive source (60);
a heat pump type air conditioner (100) which includes an outdoor unit (90) including a compressor (82), a 4-way valve (84), an outdoor heat exchanger (86), and an outdoor expansion device (88), and an indoor unit (98) including an indoor expansion device (92) and an indoor heat exchanger (94);
a waste heat supplying heat exchanger (150) which evaporates a refrigerant of the heat pump type air conditioner (100), using the waste heat of the drive source (60);
a ventilation line (160) which ventilates indoor air; said ventilation line (160) comprising:
air discharge ducts (161A), (161B) which guide the indoor air to be discharged to the atmosphere; and
air supply ducts (162A), (162B) which guide outdoor air to be introduced into an indoor space,
a dehumidifier (180) which is arranged in the ventilation line (160);
a regeneration heat supplying heat exchanger (190) which regenerates the dehumidifier (180); and
a waste heat transfer unit (192) which recovers the waste heat of the drive source (60), and transfers the recovered waste heat to at least one of the waste heat supplying heat exchanger (150), and the regeneration heat supplying heat exchanger (190),
**characterized in that** an auxiliary heating heat exchanger (170) is arranged in at least one of the air supply ducts (162A), (162B), and the waste heat transfer unit (192) transfers the recovered waste heat to the auxiliary heating heat exchanger (170).

2. The cogeneration system according to claim 1, further comprising:
a heat-transferring heat exchanger (165) which heat-exchanges the indoor air passing through the air discharge ducts (161A), (161B) with the outdoor air passing through the air supply ducts (162A), (162B).

3. The cogeneration system according to any of claims 1 or 2, wherein the dehumidifier (180) includes:
a desiccant wheel (183) which has two wheel portions (181), (182) respectively arranged in one of the air discharge ducts (161A), (161B), and a corresponding one of the air supply duct (162A), (162B); and
a wheel rotator (184, 185) which turns the desiccant wheel (183).

4. The cogeneration system according to any of claims 1 to 3, wherein the waste heat transfer unit (192) includes:
a waste heat recoverer (70) which recovers the waste heat of the drive source (60); and
a thermal storage tank (200) which stores the waste heat recovered by the waste heat recoverer (70), to supply the stored heat to at least one of the auxiliary heating heat exchanger (170) and the regeneration heat supplying heat exchanger (190).

5. The cogeneration system according to claim 4, wherein the waste heat recoverer (70) includes:
a cooling water heat exchanger (72) which absorbs heat from cooling water used to cool the drive source (60); and
an exhaust gas heat exchanger (76) which absorbs heat from exhaust gas discharged from the drive source (60).

6. The cogeneration system according to claim 4 or 5, wherein the waste heat transfer unit (192) further includes:
a first waste heat supplier (210) which supplies the waste heat recovered by the waste heat recover (70) to one of the waste heat supplying heat exchanger (150) or the thermal storage tank (200); and
a second waste heat supplier (220) which supplies the waste heat stored in the thermal storage tank (200) to one of the auxiliary heating heat exchanger (170) or the regeneration heat supplying heat exchanger (190).

7. The cogeneration system according to claim 6, wherein the first waste heat supplier (210) includes:
a recoverer-side heat medium circulation line (211) which guides a heat medium into one of the thermal storage tank (200) and the waste heat supplying heat exchanger (150), and into the waste heat recoverer (70);
a recoverer-side heat medium circulation pump (212) which pumps the heat medium, to circulate the heat medium through the recoverer-side heat medium circulation line (211);
a first heat medium supply valve (213) which is arranged in the recoverer-side heat medium circulation line (211), to selectively allow the heat medium emerging from the waste heat recoverer (70) to be supplied to the thermal storage tank (200) via the recoverer-side heat medium circulation line (211); and
a second heat medium supply valve (214) which is arranged in the recoverer-side heat medium circulation line (211), to selectively allow the heat medium emerging from the waste heat recoverer (70) to be supplied to the waste heat supplying heat exchanger (150) via the recoverer-side heat medium circulation line (211).

8. The cogeneration system according to claim 6 or 7, wherein the second waste heat supplier (220) includes:
a tank-side heat medium circulation line (221) which guides a heat medium into one of the regeneration heat supplying heat exchanger (190) and the auxiliary heating heat exchanger (170), and into the thermal storage tank (200);
a tank-side heat medium circulation pump (222) which pumps the heat medium, to circulate the heat medium through the tank-side heat medium circulation line (221);
a first heat medium supply valve (223) which is arranged in the tank-side heat medium circulation line (221) to selectively allow the heat medium emerging from the thermal storage tank (200) to be supplied to the regeneration heat supplying heat exchanger (190) via the tank-side heat medium circulation line (221); and
a second heat medium supply valve (224) which is arranged in the tank-side heat medium circulation line (221), to selectively allow the heat medium emerging from the thermal storage tank (200) to be supplied to the auxiliary heating heat exchanger (170) via the tank-side heat medium circulation line (221).

9. The cogeneration system according to any of claims 1 to 8, further comprising:
a power switching device (52) which performs a switching operation to select one of the electricity (G) generated from the generator (50) and commercial electricity (C) such that the selected electricity (G or C) is supplied to the heat pump type air conditioner (100).

10. A method of operating a system according to any of claims 1 to 9.

## Patentansprüche

1. Wärme-Kraft-System mit:
einem Generator (50) zum Erzeugen von Elektrizität (G);
einer Antriebsquelle (60), die den Generator (50) antreibt und während des Betriebs der Antriebsquelle (60) Abwärme erzeugt;
einer Klimaanlage (100) des Wärmepumpentyps mit einer Außeneinheit (90) mit einem Kompressor (82), einem Vierwegeventil (84), einem Außen-Wärmetauscher (86) und einer Außen-Expansionseinrichtung (88), und einer Inneneinheit (98) mit einer Innen-Expansionseinrichtung (92) und einem Innen-Wärmetauscher (94);
einem Abwärme zuführenden Wärmetauscher (150), der ein Kältemittel der Klimaanlage (100) des Wärmepumpentyps unter Verwendung der Abwärme der Antriebsquelle (60) verdampft;
einer Ventilationsleitung (160), über die Innenluft ventiliert wird, wobei die Ventilationsleitung (160) aufweist:
Luftableitungsrohre (161A), (161B), die die zur Atmosphäre abzuleitende Innenluft führen; und
Luftzufuhrrohre (162A), (162B), die einem Innenraum zuzuführende Außenluft führen;
einen in der Ventilationsleitung (160) angeordneten Luftentfeuchter (180);
einen Regenerationswärme zuführenden Wärmetauscher (190), der den Luftentfeuchter (180) regeneriert; und
eine Abwärmeübertragungseinheit (192), die die Abwärme der Antriebsquelle (60) zurückgewinnt und die zurückgewonnene Abwärme dem Abwärme zuführenden Wärmetauscher (150) und/oder dem Regenerationswärme zuführenden Wärmetauscher (190) zuführt;
**dadurch gekennzeichnet, dass**
ein Hilfs-Heiz-Wärmetauscher (170) in mindestens einem der Luftzufuhrrohre (162A), (162B) angeordnet ist und die Abwärmeübertragungseinheit (192) die zurückgewonnene Abwärme dem Hilfs-Heiz-Wärmetauscher (170) zuführt.

2. Wärme-Kraft-System nach Anspruch 1, ferner mit:
einem Wärmeübertragungs-Wärmetauscher (165) zum Austauschen von Wärme zwischen der Innenluft, die die Luftableitungsrohre (161A), (161B) durchläuft, und der Außenluft, die die Luftzufuhrrohre (162A), (162B) durchläuft.

3. Wärme-Kraft-System nach Anspruch 1 oder 2, wobei der Luftentfeuchter (180) aufweist:
ein Sorptionsrad (183) mit zwei Radabschnitten (181), (182), die jeweils in einem der Luftableitungsrohre (161A), (161B) und einem entsprechenden der Luftzufuhrrohre (162A), (162B) angeordnet sind; und
einer Raddreheinrichtung (184, 185) zum Drehen des Sorptionsrades (183).

4. Wärme-Kraft-System nach einem der Ansprüche 1 bis 3, wobei die Abwärmeübertragungseinheit (192) aufweist:
eine Abwärmerückgewinnungseinrichtung (70) zum Zurückgewinnen der Abwärme der Antriebsquelle (60); und
einen Wärmespeichertank (200) zum Speichern der durch die Abwärmerückgewinnungseinrichtung (70) zurückgewonnenen Abwärme und zum Zuführen der gespeicherten Wärme zum Hilfs-Heiz-Wärmetauscher (170) und/oder zum Regenerationswärme zuführenden Wärmetauscher (190).

5. Wärme-Kraft-System nach Anspruch 4, wobei die Abwärmerückgewinnungseinrichtung (70) aufweist:
einen Kühlwasser-Wärmetauscher (72), der Wärme vom Kühlwasser absorbiert, das zum Kühlen der Antriebsquelle (60) verwendet wird; und
einen Abgas-Wärmetauscher (76), der Wärme von Abgas absorbiert, das von der Antriebsquelle (60) abgegeben wird.

6. Wärme-Kraft-System nach Anspruch 4 oder 5, wobei die Abwärmeübertragungseinheit (192) ferner aufweist:
eine erste Abwärmezufuhreinrichtung (210) zum Zuführen der durch die Abwärmerückgewinnungseinrichtung (70) zurückgewonnenen Abwärme zum Abwärme zuführenden Wärmetauscher (150) oder zum Wärmespeichertank (200); und
eine zweite Abwärmezufuhreinrichtung (220) zum Zuführen der im Wärmespeichertank (200) gespeicherten Abwärme zum Hilfs-Heiz-Wärmetauscher (170) oder zum Regenerationswärme zuführenden Wärmetauscher (190).

7. Wärme-Kraft-System nach Anspruch 6, wobei die erste Abwärmezufuhreinrichtung (210) aufweist:
eine rückgewinnungsseitige Wärmemittelumlaufleitung (211), die ein Wärmemittel zum Wärmespeichertank (200) oder zum Abwärme zuführenden Wärmetauscher (150) und in die Abwärmerückgewinnungseinrichtung (70) führt;
eine rückgewinnungsseitige Wärmemittelumlaufpumpe (212) zum Pumpen des Wärmemittels durch die rückgewinnungsseitige Wärmemittelumlaufleitung (211), so dass es darin zirkuliert;
ein in der rückgewinnungsseitigen Wärmemittelumlaufleitung (211) angeordnetes erstes Wärmemittelzufuhrventil (213) zum selektiven Zuführen des von der Abwärmerückgewinnungseinrichtung (70) abgegebenen Wärmemittels über die rückgewinnungsseitige Wärmemittelumlaufleitung (211) zum Wärmespeichertank (200); und
ein in der rückgewinnungsseitigen Wärmemittelumlaufleitung (211) angeordnetes zweites Wärmemittelzufuhrventil (214) zum selektiven Zuführen des von der Abwärmerückgewinnungseinrichtung (70) abgegebenen Wärmittels über die rückgewinnungsseitige Wärmemittelumlaufleitung (211) zum Abwärme zuführenden Wärmetauscher (150).

8. Wärme-Kraft-System nach Anspruch 6 oder 7, wobei die zweite Abwärmezufuhreinrichtung (220) aufweist:
eine tankseitige Wärmemittelumlaufleitung (221) zum Führen eines Wärmemittels in den Regenerationswärme zuführenden Wärmetauscher (190) oder den Hilfs-Heiz-Wärmetauscher (170) und in den Wärmespeichertank (200);
eine tankseitige Wärmemittelumlaufpumpe (222) zum Pumpen des Wärmemittels durch die tankseitige Wärmemittelumlaufleitung (221), so dass es darin zirkuliert;
ein in der tankseitigen Wärmemittelumlaufleitung (221) angeordnetes erstes Wärmemittelzufuhrventil (223) zum selektiven Zuführen des vom Wärmespeichertank (200) ausgegebenen Wärmemittels über die tankseitige Wärmemittelumlaufleitung (221) zum Regenerationswärme zuführenden Wärmetauscher (190); und
ein in der tankseitigen Wärmemittelumlaufleitung (221) angeordnetes zweites Wärmemittelzufuhrventil (224) zum selektiven Zuführen des vom Wärmespeichertank (200) ausgegebenen Wärmemittels über die tankseitige Wärmemittelumlaufleitung (221) zum Hilfs-Heiz-Wärmetauscher (170).

9. Wärme-Kraft-System nach einem der Ansprüche 1 bis 8, ferner mit:
einer Leistungsquellenschalteinrichtung (52) zum Ausführen eines Schaltvorgangs zum Auswählen der vom Generator (50) erzeugten Elektrizität (G) oder kommerzieller Elektrizität (C), so dass die ausgewählte Elektrizität (G oder C) der Klimaanlage (100) des Wärmepumpentyps zugeführt wird.

10. Verfahren zum Betreiben eines Systems nach einem der Ansprüche 1 bis 9.

## Revendications

1. Système de cogénération comprenant :
un générateur (50) qui produit de l'électricité (G) ;
une source d'entraînement (60) qui fonctionne de façon à entraîner le générateur (50), et qui produit de la chaleur perdue pendant le fonctionnement de la source d'entraînement (60) ;
un conditionneur d'air du type pompe à chaleur (100) qui comprend une unité extérieure (90) incluant un compresseur (82), une vanne 4 voies (84), un échangeur de chaleur extérieur (86) et un dispositif d'expansion extérieur (88), et une unité intérieure (98) incluant un dispositif d'expansion intérieur (92) et un échangeur de chaleur intérieur (94) ;
un échangeur de chaleur d'alimentation en chaleur perdue (150) qui évapore un réfrigérant du conditionneur d'air du type pompe à chaleur (100), en utilisant la chaleur perdue de la source d'entraînement (60) ;
une conduite de ventilation (160) qui ventile l'air intérieur ;
ladite conduite de ventilation (160) comprenant :
des gaines d'évacuation d'air (161A), (161B), qui guident l'air intérieur de sorte qu'il soit évacué vers l'atmosphère ; et
des gaines d'amenée d'air (162A), (162B), qui guident l'air extérieur de sorte qu'il soit introduit dans un espace intérieur ;
un déshumidificateur (180) qui est disposé dans la conduite de ventilation (160) ;
un échangeur de chaleur d'alimentation en chaleur de régénération (190) qui régénère le déshumidificateur (180) ; et
une unité de transfert de chaleur perdue (192) qui récupère la chaleur perdue de la source d'entraînement (60), et qui transfère la chaleur perdue récupérée vers au moins l'un de l'échangeur de chaleur d'alimentation en chaleur perdue (150) et de l'échangeur de chaleur d'alimentation en chaleur de régénération (190) ;
**caractérisé en ce qu'**un échangeur de chaleur de chauffage auxiliaire (170) est disposé dans au moins l'une des gaines d'amenée d'air (162A), (162B), et l'unité de transfert de chaleur perdue (192) transfère la chaleur perdue récupérée vers l'échangeur de chaleur de chauffage auxiliaire (170).

2. Système de cogénération selon la revendication 1, comprenant en outre :
un échangeur de chaleur de transfert de chaleur (165) qui réalise un échange de chaleur entre l'air intérieur passant à travers les gaines d'évacuation d'air (161A), (161B), et l'air extérieur passant à travers les gaines d'amenée d'air (162A), (162B).

3. Système de cogénération selon l'une quelconque des revendications 1 ou 2, dans lequel le déshumidificateur (180) comporte :
une roue desséchante (183) qui a deux parties de roue (181), (182), respectivement disposées dans l'une des gaines d'évacuation d'air (161A), (161B), et dans l'une correspondante des gaines d'amenée d'air (162A), (162B) ; et
un rotateur de roue (184, 185) qui fait tourner la roue desséchante (183).

4. Système de cogénération selon l'une quelconque des revendications 1 à 3, dans lequel l'unité de transfert de chaleur perdue (192) comprend :
un récupérateur de chaleur perdue (70) qui récupère la chaleur perdue de la source d'entraînement (60) ; et
un réservoir de stockage thermique (200) qui stocke la chaleur perdue récupérée par le récupérateur de chaleur perdue (70), pour envoyer la chaleur stockée à au moins l'un de l'échangeur de chaleur de chauffage auxiliaire (170) et de l'échangeur de chaleur d'alimentation en chaleur de régénération (190).

5. Système de cogénération selon la revendication 4, dans lequel le récupérateur de chaleur perdue (70) comprend :
un échangeur de chaleur d'eau de refroidissement (72) qui absorbe la chaleur de l'eau de refroidissement utilisée pour refroidir la source d'entraînement (60) ; et
un échangeur de chaleur de gaz d'échappement (76) qui absorbe la chaleur des gaz d'échappement déchargés de la source d'entraînement (60).

6. Système de cogénération selon la revendication 4 ou 5, dans lequel l'unité de transfert de chaleur perdue (192) comprend en outre :
un premier distributeur de chaleur perdue (210) qui envoie la chaleur perdue récupérée par le récupérateur de chaleur perdue (70) à l'un de l'échangeur de chaleur d'alimentation en chaleur perdue (150) ou du réservoir de stockage thermique (200) ; et
un deuxième distributeur de chaleur perdue (220) qui envoie la chaleur perdue stockée dans le réservoir de stockage thermique (200) à l'un de l'échangeur de chaleur de chauffage auxiliaire (170) ou de l'échangeur de chaleur d'alimentation en chaleur de régénération (190).

7. Système de cogénération selon la revendication 6, dans lequel le premier distributeur de chaleur perdue (210) comprend :
une conduite de circulation de fluide thermique côté récupérateur (211) qui guide un fluide thermique jusque dans l'un du réservoir de stockage thermique (200) et de l'échangeur de chaleur d'alimentation en chaleur perdue (150), et dans le récupérateur de chaleur perdue (70) ;
une pompe de circulation de fluide thermique côté récupérateur (212) qui pompe le fluide thermique, pour faire circuler le fluide thermique à travers la conduite de circulation de fluide thermique côté récupérateur (211) ;
une première vanne d'alimentation en fluide thermique (213) qui est disposée dans la conduite de circulation de fluide thermique côté récupérateur (211), pour permettre de manière sélective au fluide thermique sortant du récupérateur de chaleur perdue (70) d'être envoyé au réservoir de stockage thermique (200) via la conduite de circulation de fluide thermique côté récupérateur (211) ; et
une deuxième vanne d'alimentation en fluide thermique (214) qui est disposée dans la conduite de circulation de fluide thermique côté récupérateur (211), pour permettre de manière sélective au fluide thermique sortant du récupérateur de chaleur perdue (70) d'être envoyé à l'échangeur de chaleur d'alimentation en chaleur perdue (150) via la conduite de circulation de fluide thermique côté récupérateur (211).

8. Système de cogénération selon la revendication 6 ou 7, dans lequel le deuxième distributeur de chaleur perdue (220) comprend :
une conduite de circulation de fluide thermique côté réservoir (221) qui guide un fluide thermique jusque dans l'un de l'échangeur de chaleur d'alimentation en chaleur de régénération (190) et de l'échangeur de chaleur de chauffage auxiliaire (170), et dans le réservoir de stockage thermique (200) ;
une pompe de circulation de fluide thermique côté réservoir (222) qui pompe le fluide thermique, pour faire circuler le fluide thermique à travers la conduite de circulation de fluide thermique côté réservoir (221) ;
une première vanne d'alimentation en fluide thermique (223) qui est disposée dans la conduite de circulation de fluide thermique côté réservoir (221), pour permettre de manière sélective au fluide thermique sortant du réservoir de stockage thermique (200) d'être envoyé à l'échangeur de chaleur d'alimentation en chaleur de régénération (190) via la conduite de circulation de fluide thermique côté réservoir (221) ; et
une deuxième vanne d'alimentation en fluide thermique (224) qui est disposée dans la conduite de circulation de fluide thermique côté réservoir (221), pour permettre de manière sélective au fluide thermique sortant du réservoir de stockage thermique (200) d'être envoyé à l'échangeur de chaleur de chauffage auxiliaire (170) via la conduite de circulation de fluide thermique côté réservoir (221).

9. Système de cogénération selon l'une quelconque des revendications 1 à 8, comprenant en outre :
un dispositif de commutation d'alimentation électrique (52) qui effectue une opération de commutation pour sélectionner l'une de l'électricité (G) produite par le générateur (50) et de l'électricité commerciale (C), de sorte que l'électricité choisie (G ou C) soit fournie au conditionneur d'air du type pompe à chaleur (100).

10. Procédé d'exploitation d'un système selon l'une quelconque des revendications 1 à 9.
